**Europäisches Patentamt**

**European Patent Office**

**Office européen des brevets**

(11) Veröffentlichungsnummer: **0 324 877**

**A1**

## EUROPÄISCHE PATENTANMELDUNG

(21) Anmeldenummer: **88100808.0**

(22) Anmeldetag: **20.01.88**

(51) Int. Cl.⁴: **F16H 5/40**

(43) Veröffentlichungstag der Anmeldung:
**26.07.89 Patentblatt 89/30**

(84) Benannte Vertragsstaaten:
**AT DE FR GB**

(71) Anmelder: **Csepel Autogyár**
**Pf. 38**
**H-2311 Szigetszentmiklos(HU)**

(72) Erfinder: **Simonyi, Sándor, Dr. Dipl.-Ing.**
**Petöfi u. 59**
**H-3102 Salgotarján Baglyasalja(HU)**
Erfinder: **Ternoczky, György, Dipl.-Ing.**
**Jozsef A.u. 3/D**
**H-2310 Szigetszentmiklos(HU)**
Erfinder: **Váloczi, György, Dipl.-Ing.**
**Budapesti u.40**
**H-3104 Salgotarján(HU)**
Erfinder: **Toth, István**
**Kistarján u. 8**
**H-3100 Salgotarján(HU)**

(74) Vertreter: **Patentanwälte Viering & Jentschura**
**Steinsdorfstrasse 6**
**D-8000 München 22(DE)**

(54) **Verfahren zum Bewilligen des Schaltens des automatischen Wechselgetriebes eines Kraftfahrzeugs in Abhängigkeit von der Kühlwassertemperatur.**

(57) Verfahren zum Bewilligen des Schaltens des automatischen Wechselgetriebes eines Kraftfahrzeugs in Abhängigkeit von der Kühlwassertemperatur. Die Erfindung ist ein Verfahren zur automatischen Bewilligung des Schaltens der Vorwärts- oder Rückwärts-, bzw. höheren Gangstufen des elektohydraulisch gesteuerten hydromechanischen automatischen Wechselgetriebes (2) eines Kraftfahrzeugs in Abhängigkeit von der Kühlwassertemperatur und wird derart durchgeführt, daß beim Erreichen der zum Anfahren des Kraftfahrzeuges erforderlichen Kühlwassertemperatur des Motors mittels eines wärmewahrnehmenden Signalgebers (7) ein Signal zum Eingang der Steuereinheit (13) des automatischen Wechselgetriebes (2) geleitet wird und aufgrund dieses Signals über den Ausgang der Steuereinheit (13) ein Freigabesignal zu den die I., II. bzw. Rückwärtsgangstufe schaltenden elektrischen Armaturen des elektrohydraulischen Ventilsystems (6) des automatischen Wechselgetriebes (2) geführt wird, dann beim Erreichen der zu den höheren Stufen erforderlichen Kühlwassertemperatur ein neues Signal zum Eingang der Steuereinheit (13) geleitet wird und aufgrund dieses Signals über den Ausgang der Steuereinheit (13) ein neues Freigabesignal zu den die höheren Stufen schaltenden elektrischen Armaturen (11) des elektrohydraulischen Ventilsystems (6) des automatischen Wechselgetriebes (2) geführt wird.

Fig.1

## Verfahren zum Bewilligen des Schaltens des automatischen Wechselgetriebes eines Kraftfahrzeugs in Abhängigkeit von der Kühlwassertemperatur

Die Erfindung bezieht sich auf ein Verfahren, mit dem das Ingangsetzen und das Beschleunigen eines Kraftfahrzeugs automatisch begrenzt werden können, solange der Motor nicht auf die Betriebstemperatur erwärmt ist.

Zur Zeit ist es bei der Mehrheit der Kraftfahrzeuge dem Fahrzeugfahrer überlassen, ob er die mit Aufwärmung des Motors verbundenen Vorschriften einhält oder nicht. Bei den mit mechanischem Wechselgetriebe angetriebenen Kraftfahrzeugen sind die mit einem federkraftspeichernden Luftbremssystem ausgestatteten Kraftfahrzeuge die einzigen Ausnahmen. Bei einem Teil dieser Fahrzeuge kann man nämlich von dem Druck der Speiseluft des Luftbremssystems auf den Zustand des Motors folgern, so daß dem Fahrzeugfahrer ein ungenügender Aufwärmungszustand von dem System durch Blockierung des Luftbremssystems gemeldet wird. Nach einer angemessenen Aufwärmung des Motors erhöht sich der Druck der Speiseluft, die Luftbremsen können gelöst werden und das Kraftfahrzeug kann inganggesetzt werden. Nicht einmal dieses System bietet jedoch einen Schutz gegen ein vorzeitiges Schalten der eine größere Belastung des Motors bedeutenden höheren Gangstufen. Somit ist der Schutz des Motors auch hier teilweise dem Fahrzeugfahrer überlassen.

Bei den mit automatischem Wechselgetriebe ausgestatteten Kraftfahrzeugen meldet sich dieses Problem in erhöhtem Maße. Das Anfahren des Kraftfahrzeugs hängt nämlich noch vom Fahrzeugfahrer ab, das Schalten der höheren Gangstufe erfolgt aber automatisch (ausgenommen, wenn der Fahrzeugfahrer besonders sorgfältig ist und die automatische Steuerung beim Starten stufenweise bis zur direkten Stufe führt). Da der Zeitpunkt des Schaltens der Gangstufen praktisch unkontrollierbar ist, oder wenigstens eine derartige Sorgfältigkeit vom Fahrzeugfahrer nicht erwartet werden kann, sollte man allerdings nach dem Verhindern des vorzeitigen Anlassens und des Stufenschaltens streben. Die bisher einzige Lösung ist in der GB-B-2 126 291 beschrieben; aber auch hier wird nur ein Vorschlag zur Begrenzung des Anfahrens gemacht. Aus der Lamellenkupplung der Anfahrstufe wird das Öl durch einen mittels eines gesonderten Ventils betätigten Umgehungszweig in die Ölwanne zurückgeführt, wobei das Ventil in Abhängigkeit von der Kühlwassertemperatur geregelt ist. Dieses System ist auch in sich kompliziert und es wäre noch komplizierter, dieses auf die nötigen weiteren Gangstufen auszuweiten.

Eine Zielsetzung der Erfindung ist es, das Belasten des nicht aufgewärmten Motors bei mit einem automatischen Wechselgetriebe ausgestatteten Kraftfahrzeugen, vom Willen des Fahrzeugfahrers unabhängig, automatisch zu verhindern.

Der erfindungsgemäßen Lösung liegt die Erkenntnis zugrunde, daß es wesentlich einfacher ist, in die Steuerung des automatischen Wechselgetriebes einzugreifen, als in das durchführende System, insbesondere wenn die Steuerung aus elektronischen Elementen aufgebaut ist.

Die Erfindung ist also ein Verfahren und eine Steuerschaltung zum automatischen Bewilligen des Schaltens der Vorwärts-, Rückwärts-, bzw. höheren Gangstufe eines elektronisch gesteuerten, hydromechanischen automatischen Wechselgetriebes eines Kraftfahrzeugs in Abhängigkeit von der Kühlwassertemperatur, wobei beim Erreichen der zum Anfahren des Kraftfahrzeugs erforderlichen Temperatur des Kühlwassers des Motors mittels eines wärmewahrnehmenden Signalgebers ein Signal an den Eingang der Steuereinheit gegeben wird und aufgrund dieses Signals über den Ausgang der Steuereinheit ein Freigabesignal zu den die I., II. bzw. Rückwärtsgangstufe schaltenden elektrischen Armaturen des elektrohydraulischen Ventilsystems des automatischen Wechselgetriebes geführt wird, dann beim Erreichen der für die höheren Gangstufen erforderlichen Kühlwassertemperatur ein neues Signal an den Eingang der Steuereinheit gegeben wird und aufgrund dieses Signals über den Ausgang der Steuereinheit ein neues Freigabesignal zu den die höheren Gangstufen schaltenden Armaturen des elektrohydraulischen Ventilsystems des automatischen Wechselgetriebes geführt wird.

Die Erfindung wird nachstehend anhand eines Ausführungsbeispiels mit Hilfe der Zeichnungen näher erläutert. Es zeigen:

Fig. 1 die Antriebseinrichtung eines Kraftfahrzeugs und

Fig. 2 eine erfindungsgemäße Schaltungsanordnung der elektronischen Einrichtung zur Durchführung des erfindungsgemäßen Verfahrens.

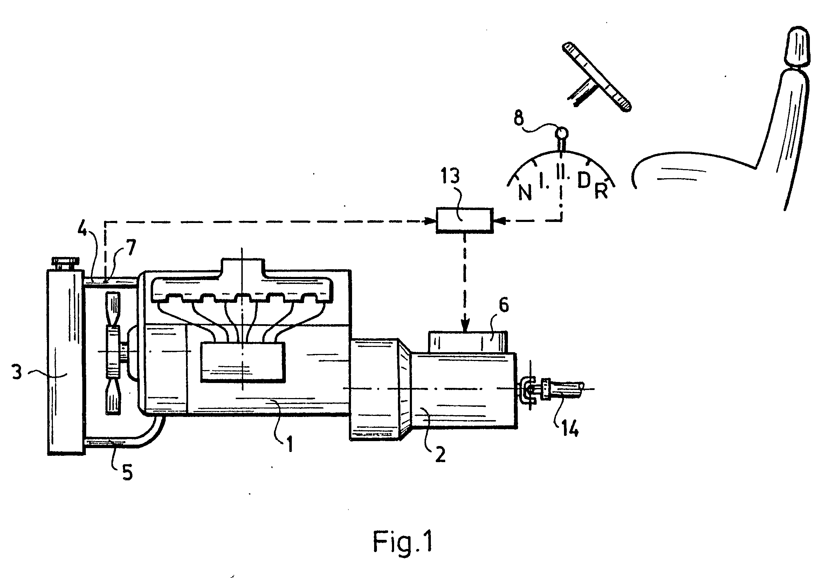

Das erfindungsgemäße Verfahren wurde bei der Antriebseinrichtung eines städtischen Autobusses verwirklicht. Ein in Figur 1 dargestellter Sechszylindermotor 1 mit Dieselbetrieb ist mit einem Kühlradiator 3 und mit Kühlwasserrohren 4 und 5 verbunden. Dies ist das Kühlwassersystem des Motors 1.

Der Motor 1 übergibt den Antrieb den nicht dargestellten Rädern über ein elektrohydraulisch gesteuertes hydromechanisches automatisches Wechselgetriebe 2 und über eine Kardanwelle 14. Ein das Stufenschalten des automatischen Wechselgetriebes 2 durchführendes elektohydraulisches Ventilsystem 6 wird von einer elektronischen Steuereinheit 13 gesteuert, die der Fahrzeugfahrer mit Hilfe eines Gangwählschalters 8 (Kontroller) beeinflussen kann.

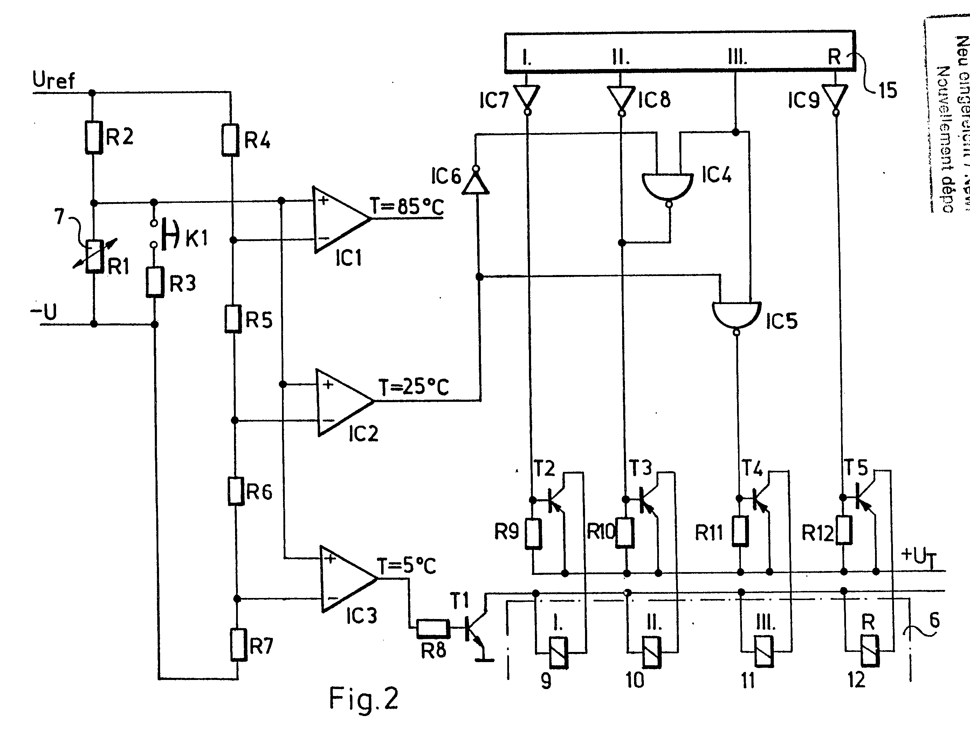

Die Elemente der in Figur 2 dargestellten elektronischen Einrichtung sind in der Steuereinheit 13 eingebaut, können aber auch als selbständige Einheit zusammengebaut werden.

Zwecks Messung der Kühlwassertemperatur ist im Kühlwasserrohr 4, das der Rückflußzweig des Kühlwassersystems des Motors 1 ist, ein Temperatursignalgeber 7 eingebaut. Der Temperatursignalgeber 7 ist in diesem Fall ein Wärmegradmesserwiderstand R1 (NTK), der hinter dem Spannungsteiler R2 mit den Widerständen R4, R5, R6, R7 und mit den Komparatoren IC1, IC2, IC3 (μ A741) in Verbindung steht.

Die Elektromagnete 9, 10, 11 und 12 der die I., II., III. und die R-(Rückwärts-) Gangstufe schaltenden Ventile des elektrohydraulischen Ventilsystems 6 sind einerseits über einen Schaltertransistor T1 (2 N 3055) an Masse, andererseits über Leistungsverstärker T2, T3, T4 und T5 (BD 240) an der Speisespannung angeschlossen.

Der Schaltertransistor T1 ist über einen Widerstand R8 mit dem Ausgang des Komparators IC 3 verbunden.

Der Stufenwählerteil 15 der Steuereinheit 13 ist in nicht dargestellter Weise mit dem Gangwählschalter 8 und mit den zur Bestimmung der jeweils adäquaten Gangstufe erforderlichen Signalgebern verbunden.

Der der I. Gangstufe entsprechende Signalausgang des Stufenwählerteils 15 ist über eine Treiberstufe IC7 (7406) am Leistungsverstärker T2 und dazu parallel über einen Widerstand R9 an der Speisespannung angeschlossen.

In ähnlicher Weise ist der der R- (Rückwärts-) Gangstufe entsprechende Signalausgang des Stufenwählerteils 15 über eine Treiberstufe IC9 (7406) an den Leistungsverstärker T5 und dazu parallel über eine Widerstand R17 an der Speisespannung angeschlossen.

Auch der der II. Gangstufe entsprechende Signalausgang des Stufenwählerteils 15 ist über eine Treiberstufe IC8 (7406) am entsprechenden Leistungsverstärker T3, und über einen Widerstand R10 an der Speisespannung angeschlossen, aber zu der Treiberstufe IC8 parallel ist auch der Ausgang des NAND-Tors (7437) einer Leistungsstufe IC4 am Leistungsverstärker T3 angeschlossen. Einer der Eingänge des NAND-Tors der Leistungsstufe IC4 ist über eine Treiberstufe IC6 (7406) am Ausgang des Komparators IC2, der andere Eingang ist am der III. Gangstufe entsprechenden Signalausgang des Stufenwählerteils 15 angeschlossen.

Der der IV. Gangstufe entsprechende Signalausgang des Stufenwählerteils 15 ist über den einen Eingang und Ausgang des NAND-Tors (7437) der Leistungsstufe IC5 am Leistungsverstärker T4 und dazu parallel über den Widerstand R11 an der Speisespannung angeschlossen. Der andere Eingang des NAND-Tors der Leistungs stufe IC5 ist ebenfalls am Ausgang des Komparators IC2 angeschlossen.

Die Pole des Wärmegradmesserwiderstandes R1 können mittels eines Handschalters K1 und eines Widerstandes R3 kurzgeschlossen werden.

Von dem oben beschriebenen System wird das erfindungsgemäße Verfahren wie folgt durchgeführt.

Nach dem Anlassen des Motors 1 sendet der Temperatursignalgeber 7 der Steuereinheit 13 fortlaufend Signale über die Änderung der Kühlwassertemperatur. Die Komparatoren IC2 und IC3 werten dieses Signal aus, und zwar derart, daß wenn die Kühlwassertemperatur den Wert von $5\,^{\circ}C$ erreicht, das Signal am Ausgang des Komparators IC3 erscheint und wenn sie den Wert von $25\,^{\circ}C$ erreicht, das Signal am Ausgang des Komparators IC2 erscheint.

Die Temperaturwerte sollen derart gewählt werden, wie sie von der Belastbarkeit des Motors her zugelassen sind. die oben angegebenen Werte von $5\,^{\circ}C$ bzw. $25\,^{\circ}C$ sind bei einem gegebenen Motor erfahrene Werte; sie können aber im allgemeinen bei jedem Motor verwendet werden.

Wenn der Fahrzeugfahrer - normale Verkehrs- und Straßenverhältnisse angenommen - mit dem Kraftfahrzeug starten will, schaltet er mit dem Gangwählschalter 8 in die Direktstellung D. Wenn er danach mit dem Niederdrücken des Gaspedals das Kraftfahrzeug beschleunigt, würde die Steuereinheit 13 - zur Beschleunigung des Kraftfahrzeuges - dem elektrohydraulischen Ventilsystem 6 den Befehl zum fortlaufenden Aufwärtsschalten des automatischen Wechselgetriebes 2 bis zur III. Stufe geben.

Solange aber die Kühlwassertemperatur den Wert von $5\,^{\circ}C$ nicht erreicht hat, erscheint kein Signal am Ausgang des Komparators IC3; so schließt der Schaltertransistor T1 die Elektromagneten 9, 10, 11, 12 nicht an Masse an. Auf diese Weise kommt vom Stufenwählteil 15 vergeblich ein Signal zum Einschalten der I. Gangstufe; der Elektromagnet 9 kann den Befehl nicht ausführen.

Wenn die Kühlwassertemperatur den Wert von $5\,^{\circ}C$ erreicht hat, schließt der Schaltertransistor T1 die Elektromagneten 9, 10, 11, 12 aufgrund des Signals des Komparators IC3 an Masse an. Jetzt legt der Leistungsverstärker T2 den Elektromagneten 9 zum Erzeugen des der I. Gangstufe entsprechenden Signals des Stufenwählteils 15 an die Speisespannung und dann nach entsprechender Beschleunigung des Kraftfahrzeuges legt der Leistungs`verstärker T3 den Elektromagneten 10 zum Erzeugen des der II. Gangstufe entsprechenden Signals an die Speisespannung. In dieser Weise hat das elektrohydraulische Ventilsystem 6 das automatische Wechselgetriebe 2 in die I. und die II. Gangstufe geschaltet.

Wenn das Kraftfahrzeug weiter beschleunigt wird, erreicht es die zum Schalten der III. Gangstufe erforderliche Geschwindigkeit. Der Stufenwählteil 15 erzeugt an seinem entsprechenden Ausgang das Signal zum Schalten der III. Gangstufe. Dies induziert aber am Ausgang des NAND-Tors der Leistungsstufe IC5 nur dann ein Signal, wenn dazu auch eine weitere Bedingung erfüllt ist. Nämlich auch das Signal des Ausgangs des Komparators IC2 muß am Eingang des NAND-Tors der Leistungsstufe IC5 erscheinen. Wenn diese Bedingung erfüllt ist, schließt der Leistungsverstärker T4 auf das Signal des Ausgangs des NAND-Tors der Leistungsstufe IC5 den Elektromagneten 11 an die Speisespannung an. In dieser Weise schaltet das elektrohydraulische Ventilsystem 6 das automatische Wechselgetriebe 2 in die III. Stufe.

Wenn die Kühlwassertemperatur den Wert von 25 °C noch nicht erreicht hat, erlischt das Signal am Ausgang des NAND-Tors der Leistungsstufe IC4 auf Wirkung des Signals des Komparators IC2 und erscheint am Ausgang des NAND-Tors der Leistungsstufe IC5 und das Schalten der III. Gangstufe erfolgt in der oben beschriebenen Weise.

Wenn der Fahrzeugfahrer in den Rückwärtsgang schalten will, gibt er der Steuereinheit 13 mittels des Gangwählschalters 8 einen entsprechenden Befehl. Das der Rückwärtsgangstufe entsprechende Signal aus Stufenwählteils 15 schließt den Elektromagneten 12 des die Rückwärtsgangstufe verwirklichenden Ventils des elektrohydraulischen Ventilsystems 6 über die Antriebsstufe IC9 mittels des Leistungsverstärkers T5 an die Speisespannung an, und wenn die Kühlwassertemperatur höher als 5 °C ist, schließt der Schaltertransistor T1 den Elektromagneten 12 auf das Signal des Komparators IC3 auch an Masse an.

Aus den obigen Ausführungen ist ersichtlich, daß mit dem erfindungsgemäßen Verfahren das Schalten beliebiger Stufen von der Kühlwassertemperatur abhängig verboten werden kann.

Da manchmal derartige Gefahrensituationen vorkommen können, in denen nicht das Schonen des Motors, sondern das schnelle Anfahren wichtig ist, kann das Sytem mit Hilfe des Handschalters K1 von der Kühlwassertemperatur unabhängig gemacht werden.

Im System ist auch der bereits erwähnte Komparator IC1 (μ A741) eingebaut, dies hat aber mit dem erfindungsgemäßen Verfahren nichts zu tun. Die gegebene Ausbildung bietet aber von sich selbt heraus an, daß auch die Überhitzung des Kühlwassers beobachtet werden kann. Deshalb erzeugt der Komparator IC1 beim Erreichen des Wertes von 85 °C ein Signal, mit dem eine nicht dargestellte Warnsignaleinrichtung (Signallampe, akustisches Signal) bestätigt werden kann.

## Ansprüche

Verfahren zum automatischen Bewilligen des Schaltens der Vorwärts- oder Rückwärts- bzw. höheren Gangstufen des elektrohydraulisch gesteuerten hydromechanischen automatischen Wechselgetriebes (2) eines Kraftfahrzeuges in Abhängigkeit von der Kühlwassertemperatur, dadurch gekennzeichnet, daß beim Erreichen der zum Anfahren des Kraftfahrzeugs erforderlichen Kühlwassertemperatur des Motors mittels eines wärmewahrnehmenden Signalgebers (7) ein Signal zum Eingang der Steuereinheit (13) des automatischen Wechselgetriebes (2) geleitet wird und aufgrund dieses Signals über den Ausgang der Steuereinheit (13) ein Freigabesignal zu den die I., II. bzw. Rückwärtsgangstufe schaltenden elektrischen Armaturen (9, 10, 12) des elektrohydraulischen Ventilsystems (6) des automatischen Wechselgetriebes (2) geleitet wird und dann beim Erreichen der zu den höheren Stufen erforderlichen Kühlwassertemperatur ein neues Signal zum Eingang der Steuereinheit (13) geleitet wird und aufgrund dieses Signals über den Ausgang der Steuereinheit (13) ein neues Freigabesignal zu den die höheren Stufen schaltenden elektrischen Armaturen (11) des elektrohydraulischen Ventilsystems (6) des automatischen Wechselgetriebes (2) geleitet wird.

EP 0 324 877 A1

Fig.1

Fig.2

EP 0 324 877 A1

Europäisches
Patentamt

**EUROPÄISCHER RECHERCHENBERICHT**

Nummer der Anmeldung

EP 88 10 0808

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 572 029 (KINUGASA et al.)<br>* Spalte 1, Zeilen 38-47; Spalte 2, Zeilen 12-27; Spalte 3, Zeilen 10-36; Spalte 4, Zeilen 11-49; Figuren 1,4,5 *<br>--- | 1 | F 16 H 5/40 |
| A | US-A-4 531 432 (INAGAKI et al.)<br>* Spalte 1, Zeile 62 - Spalte 2, Zeile 19; Spalte 2, Zeile 45 - Spalte 3, Zeile 5; Figuren 1,2 *<br>--- | 1 | |
| A | DE-A-3 325 002 (HONDA)<br>* Seite 3, Zeilen 10-12; Seite 5, Zeilen 28-36; Seite 8, Zeile 36 - Seite 9, Zeile 14; Seite 12, Zeilen 28-33; Seite 13, Zeilen 5-22; Figuren 2,3,4 *<br>& GB-A-2 126 291 (Kat. D,A)<br>----- | 1 | |

RECHERCHIERTE SACHGEBIETE (Int. Cl.4)

B 60 K
F 16 H

Der vorliegende Recherchenbericht wurde für alle Patentansprüche erstellt

| Recherchenort | Abschlußdatum der Recherche | Prüfer |
|---|---|---|
| DEN HAAG | 08-09-1988 | CLASEN M.P. |